# EUROPEAN PATENT APPLICATION

(11) **EP 2 813 274 A1**
(43) Date of publication of application: **17.12.2014**
(21) Application number: 13171293.7
(22) Date of filing: 10.06.2013
(51) Int. Cl.: B01D 46/00, B01D 46/44, B60H 3/06

(54) **Filter system for cabins**

(71) Applicant: Mobile Climate Control B.V., 5171 PL Kaatsheuvel (NL)
(72) Inventor: van Dijk, Johannes T., 5171 MA Kaatsheuvel (NL)
(74) Representative: Latzel, Klaus

(57) **Abstract**

The invention relates to a pressurized filter system for pressurizing a cabin of a stationary or mobile equipment with filtered air, comprising a substantially airtight housing comprising a blower motor and an air filter system for distributing filtered air drawn from outside the cabin through inlet into the cabin by means of outlet, wherein the filter system comprises at least a number of prefilters and a number of main filters, and the blower motor is arranged between the prefilter(s) and the main filter(s). The invention further comprises to a method for controlling such a pressurized filter system for a cabin of a stationary or mobile equipment, wherein the method comprises the step of generating and maintaining the pressure inside the cabin at a pre-set level anywhere between 100pa and 300pa.

## Description

The invention generally relates to a pressurized filter system for pressurizing a cabin of stationary or mobile equipment such as work vehicles with filtered air. In addition, the invention relates to a method of controlling such a filter system.

Conventional filter systems for work vehicles, such as skid steers or wheel loaders or the like, are designed to be operated in polluted air environments. Polluted air environments are generally polluted with dust particles, gas particles, asbestos fibres and the like. Filter systems are commonly provided at the air inlet of the cabin to protect the operator from pollutants.

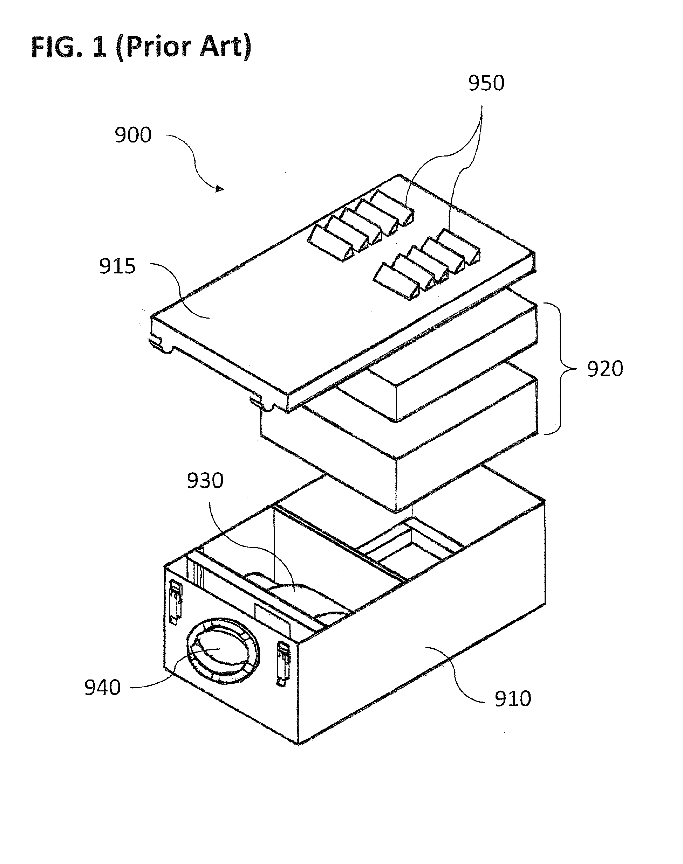

DE 29801489 U1 describes a general construction for commonly used filter systems. A common filter system as described in this utility model application is shown in Fig. 1. It consists of housing, a filter stack comprising two filters, and a blower motor provided directly before the air outlet of the filter system used for blowing filtered air into the cabin. The blower motor sucks air from outside of the housing, which is then sucked through the filter system and blown directly into the cabin by means of the blower motor.

Alternatively, HVAC systems working with a recirculation system and, thus, being substantially air tight against the outer atmosphere are known, e.g. from WO 2013/023240. In the system, air is sucked from the cabin and recirculated through the blower motor and, then recirculating through the filters into the cabin.

The object of the present invention is to provide an improved filter system for cabins, more particularly to provide a filter system with increased filter efficiency, as well as to a method of controlling such a filter system.

This object is achieved with a filter system according to claim 1 and a method according to claim 10. Further embodiments and advantages of the filter system and the method according to the invention are defined by the dependent claims.

More particularly, the pressurized filter system according to the invention is adapted or controlled for pressurizing a cabin of stationary or mobile equipment with filtered air. Thereby, the cabin is all the time pressurized to avoid an easy intrusion of pollutants into the cabin even when the cabin is not air tight or has leakages. In other words, pressurized filter system means that the filter system is adjusted to provide and maintain an overpressure in the cabin during the operation of the vehicle or other equipment such as stationary equipment.

In order to provide and maintain an overpressure in the cabin, the filter system itself is under an overpressure at least at the air outlet, i.e. the part where fresh and filtered air is blown into the cabin. Therefore, the filter system preferably comprises a substantially airtight housing to maintain the overpressure in this part of the filter system.

Additionally, the filter system comprises a blower motor and an air filter system in the housing for distributing filtered air drawn from outside the cabin through an air outlet into the cabin.

The air filter system comprises at least a number of prefilters and a number of main filters. A number means at least one, but can also be two or more, preferably two, three, or four subsequent separate filters provided in line. Of course, parallel air filter lines can also be used if at least one prefilter and at least one main filter are provided in the filter system in each of the parallel lines.

The blower motor is arranged between the prefilter(s) and the main filter(s). Due to this arrangement, the efficiency of the filter system according to the invention can be improved to about 98 %, preferably 99 %, more preferably 99.5 % and higher. An efficiency of about 99.95 % can be achieved in some special filter configurations of prefilters and main filters. The reason of the improvement of the efficiency is assumed to be the specific arrangement of the blower motor between the prefilters and main filters. This specific arrangement allows that the main filters are in a chamber in which an overpressure is generated or maintained. Therefore, even if small leakages are present in the housing, the pollutions from outside cannot intrude into the chamber of the main filters due to a constant air flow from inside of the chamber to the outside. Thus, the system can guarantee a high efficiency at least at and after the stage of the main filters. The same efficiency is given for the air outlet and the cabin which are generally controlled and maintained under an overpressure.

The filter system according to the invention is assumed to be the first filter system providing an efficiency of more than 98 % or higher, especially of 99 % or higher. Efficiency is thereby defined as the percentage of particles that are blocked and are prevented from entering into the cabin. For instance, during a break down of 100,000 particles with a size of 0.3 µ, 99,999 are blocked and are prevented from entering into the cabin. They cannot break through the filter. This amounts to an efficiency of 99.999 %.

In a further aspect, the afore-mentioned object is solved by a method for controlling a pressurized filter system for a cabin of stationary or mobile equipment. The system controlled by the method according to the invention comprises a substantially airtight housing comprising a blower motor and an air filter system for distributing filtered air drawn from outside the cabin into the cabin. The filter system is a filter system as describe before and, thus, comprises at least a number of prefilters and a number of main filters, while the blower motor is arranged between the prefilter(s) and the main filter(s), wherein the method comprises the step of generating and maintaining the pressure inside the cabin within a predetermined level. In addition, it is preferred that the control method comprises at least the step of measuring the pressure inside and outside of the cabin and controlling the pressure inside the cabin to a level above the pressure outside the cabin. This can, for example, be achieved by controlling the amount of air flow into the cabin. That means, if the pressure needs to be increased, for example, the blower motor is steered to blow more air into the cabin per time unit as in the standard mode, thereby regulating the overpressure inside the cabin to a higher level. Decreasing the amount of air blown into the cabin would results to a lowering of the pressure inside the cabin.

In general, the objective of a pressurized filter system is to keep the cabin at an overpressure by feeding the cabin with new clean filtered air, so that the operator of the equipment can operate safely in a substantially healthy and clean environment. Substantially healthy and clean environment means that most of the particulate pollutants and gaseous pollutants are filtered and hindered from entering into the cabin. Moreover, even if the filter system has a leakage, the main filters are provided such, that the pollutants are hindered in entering the cabin through the leakage, as the main filters are in a chamber wherein the pressure level is controlled to be higher than the outside air pressure. Thus leakages become less important or unimportant and the safety of the operator in the cabin can be improved or guaranteed.

In the following preferred embodiments are described which are particularly useful for improving the efficiency of the filter system according to the invention or of the method according to the invention.

The pressurized filter system according to a preferred embodiment is designed such that air drawn from outside the cabin is sucked into the prefilter(s) by a vacuum generated in a prefilter chamber by means of the blower motor and is then pressed into the main filter(s) arranged in a main filter chamber on the pressure side of the blower motor. By pressing the air into the main filters, the main filter chamber is under an overpressure, similar to the cabin, so that leakages in the housing at each position, and especially at the position of the main filter chamber, would not cause any pollution of the air distributed into the cabin with gaseous or particulate pollutants. In addition, the main filters are pressed into the main filter chamber so that the overpressure in the main filters leads to an improved closure of the gap between the main filters and the housing of the main filter chamber. In contrast to an overpressure, a vacuum or lower pressure level than outside the filter system would facilitate the generation of pathways between the main filter and the housing of the main filter chamber, because the lower pressure level leads to shrinkage of the main filters. Thus, the overpressure in the main filter chamber improves the efficiency of the filter system.

In another preferred embodiment of the pressurized filter system the cabin is substantially tightly closed to allow maintaining an overpressure in the cabin. Substantially tightly closed means in the light of the invention that the cabin can be pressurized easily, while a few leakages in the cabin housing may be present as long as the pressure level can be maintained without any additional pressurizing system. If there may be leakages, the air flow is from inside the cabin to the outside so that no gaseous or particulate pollutants can enter the cabin.

The pressurized filter system according to another embodiment of the invention comprises prefilter(s) and/or main filter(s) which are fixed by a clamping system in the prefilter chamber and the main filter chamber, respectively. The clamping system assures that a movement of the filters in the respective chamber is not possible and the filter frames are pressed against the respective filter seats and/or the wand of the housing. This is advantageous in rough environments, especially if the filter system is exposed to strokes and vibrations.

The pressurized filter system preferably comprises an arrangement of the prefilter(s) and/or the main filter(s) as horizontal positioned filters. Horizontal means that they are substantially horizontal or nearly parallel to the place where the equipment is placed. In this embodiment, the prefilter(s) and/or main filter(s) may have edges which are arranged on reinforced resting areas provided in the prefilter chamber and the main filter chamber, respectively. Thereby, bending of the reinforced resting areas can be suppressed or avoided. As the bending of the resting areas may cause leakages between the filter frame and the housing, pollutants may come into the next filter chamber or in the cabin in conventional systems. The reinforced resting areas avoid this bending and, thus, the efficiency of the filter system according to the invention can be improved therewith.

The pressurized filter system can be provided with a clamping device for the prefilter and main filter packets or stacks. The clamping device is adjusted to press the filters, especially with their frames, against their seats or resting areas so that substantially no movement of the filters is possible. A high and uniform force which can be provided by a plate or a number of separate clamps insures a good security at the seals of the gaskets. Thereby, the efficiency can be improved because leakages between the filter frames and the housing are minimized or not present at all.

It is preferred that the main filters are provided as horizontal filters installed in the main filter chamber by placing them into seats at the walls of the housing of the main filter chamber and placed from the side of the hood of the filter system housing. One, two or more clamps can be used to press the filters in their seats from the side of the hood. If only one clamp is used, a plate with a frame and holes can be used to fix the filters in their position.

In the prefilter chamber, the filters are installed also through the hood of the filter system which preferably is to be opened and closed without any tools. The prefilters can be placed at the side of the air inlet wall in seats at the housing and pressed by a plate on its back side (opposite to the air inlet) against their seats. The plate can be equipped with a clamp which can be fixed in its closed position after the installation of the filters and opened to release the filters.

Alternatively, the clamping system in the prefilter chamber comprises a reinforced fixed frame behind the filter, i.e. at the side looking to the blower motor, and two clamps or screws at the side of the air inlet which are adjusted to press the prefilter(s) against the fixed frame. Thereby, the filters are fixed in their positions and cannot move. As the clamps or the screws are provided at the air inlet side, a higher level of integrity can be achieved and they are easily adjustable or to be opened by an operator which is, for example, preferred in the event of changing the filters. Advantageously, the filters are provided in the filter system in a manner that the operator is able to change the filters without using any tools.

The pressurized filter system according to another embodiment may further comprise a control means, for measuring and maintaining the pressure inside the cabin to a predetermined level of overpressure compared to the pressure outside the cabin, in particular to an overpressure of at least 100 Pa and a maximum of 300 Pa. Both values have to be seen as boundaries, while a 10 or 20 % lower or higher level, respectively, can lead to the same or similar results. Thus, they can be seen as equivalent solutions, while working within the given levels is preferred from the view of the health and safety of the operator.

The pressurized filter system according to a further embodiment preferably comprises a monitoring means, such as a mechanical or electronic air pressure sensor, inside the cabin to measure and monitor pressure level data signal therein. Conventional pressure sensor means can be used.

In addition to the above embodiment, the pressurized filter system can advantageously further comprise a control means sending the monitored pressure level data signal generated by the monitoring means to the blower motor or a Puls Width Modulation (PWM) signal to the blower motor and controlling the pressure level inside the cabin within a predetermined level. In this regard, it is preferred to use a blower motor which is PWM powered from the print circuit board (PCB board). The motor is usually a motor having an extra-long life of about 30,000 hours or more and generally is separately powered. In the control means electronic data are measured by the sensors and sent to the blower motor. The air pressure sensor measures the difference between the cabin pressure and the outside pressure (generally, this is standard atmosphere pressure) by means of a small hose to the outside. When a low cabin pressure, i.e. lower than the predetermined level, is monitored, the control means will send a measuring data signal to the blower motor, which will then speed up the blower motor. Thus, a higher air flow is used to generate the pressure in the cabin and to maintain it at this pressure. After the pressure reaches the predetermined pressure level in the cabin, the blower motor will adjust the speed to maintain the predetermined pressure level in the cabin. Optionally, the control system may give an alarm if the pressure is outside the recommended value of about 100 Pa to 300 Pa in the cabin. Thus, the feedback control system improves the efficiency of the filter system and is responsible to guarantee a high safety for the operator when operating the filter system according to the invention.

In general, the objective of a pressurized filter system as defined in the afore-mentioned preferred embodiments is to keep the cabin at an overpressure of between about 100 and 300 Pa and, at the same time, feeding the cabin with new clean filtered air, so that the operator of the equipment can operate safely in a substantially healthy and clean environment. Substantially healthy and clean environment means that most of the particulate pollutants and gaseous pollutants are filtered and hindered from entering into the cabin. Thereby, the efficiency of such a pressurized filter system can be improved to a value of 99 % and more, preferably 99.9 % or more.

Exemplified filters for the use in the filter system according to the invention are particle or gas filters such as air-filters NEN - EN 779, NEN - EN 1822 (Hepa - Ulpa), or active coal filters, such as CEN - EN 14387. Preferably, one or two air filters are used as prefilters to avoid a contamination of the blower motor compartment and to enhance the life time of the blower motor. As the main filters, Hepa, Ulpa and active coal filters are preferably used in an atmosphere of overpressure in the filter system according to the invention. Thus, the efficiency of the filter system is increased by using a combination of prefilters and main filters.

The filter surface is kept as large as possible in order to be able to evenly filter the particles/gases with minimal loss of pressure. By means of the large filter surface, the contact time is hereby fully exploited.

In active coal canisters which are generally used as filters in common systems, a lot of vibrations during operation causes the active coal to drop which implies a decrease in the volume of coal at specific parts of the filter. Thereby, some air space is generated on the upper side of such active coal canisters. On this particular place the resistance is lower and polluted air follows the path of the lowest resistance. The polluted air concentrates on the thinnest layer from the canister and flows with higher speed through the canister. As a result, a lot of air comes through the filter at the thinnest layer and the level of pollution gets fast to a high level. The active coal filters used in the filter system according to the invention are designed to be used in a horizontal position and within a pressurized atmosphere. Thereby, the active coal has on its total surface the same thickness and, thus, the same resistance as to the air flow through the filter. Hence, improved filter efficiency can be guaranteed compared to the active coal canisters commonly used at the suction side of the blower motor.

According to a preferred embodiment of the method according to the invention, the method further comprises the step of feeding the cabin with new or fresh filtered air. The new or fresh air is sucked from outside the cabin through the air inlet into the filter system continuously or discontinuously, while the air flow can be regulated according to the needs of maintaining an overpressure in the cabin.

In another embodiment, the method advantageously further comprises a step of monitoring pressure level data signal inside the cabin and controlling the pressure level inside the cabin within a predetermined level of overpressure compared to the pressure outside the cabin, in particular to an overpressure of at least 100 Pa and a maximum of 300 Pa, while any value between these boundaries can be used as a predetermined value.

According to a further preferred embodiment of the method according to the invention, the method comprises the step of controlling and displaying of the correct position of the prefilter(s) and/or main filter(s) before and during the operation of the pressurized filter system. Usually, sensors are used to check whether or not the filters are accurately positioned or present at all. In case one of the filters is not correctly installed, a controller of the filter system gives an alarm, which for example can be an acoustic and/or visible signal, such as an alarm sound or a flashing LED.

In addition to this warning system (sensors and control steps), the method can encompass a step of controlling the maximum lifetime of the filters (prefilter(s) and main filter(s), respectively). Preferably, the working hours of the installed filters will be counted by a monitoring means and will be displayed continuously or after reaching a limit of lifetime. After reaching a predetermined maximum of the filter(s), the system will give an alarm to change the filter(s) either via an acoustic or visible signal. The usual lifetime of air filters is a maximum of about 26 weeks, while the lifetime of active coal filters is a maximum of about 13 weeks. Therefore, it is advantageous to install a monitoring means for each filter separately and have separate displays for each of the filters.

In an alternative embodiment, the filters can be monitored by means of sensors and a controller which can measure the remaining lifetime depending on the measured data signal (such as air flow parameters through the filter or air quality behind the filter). For example, for measuring an active carbon filter (sometimes also called active charcoal filter), an HC sensor can be used for monitoring the air quality behind the filter. HC sensors are sensors for hydrocarbons, especially polycyclic aromatic hydrocarbons such as PAKs, e.g. benzene, toluene, naphthalene, and the like. By monitoring the remaining life time, the safety can be guaranteed even though the equipment is used in an environment with extreme pollution, which generally reduces the lifetime of the filters and makes it necessary to change the filters faster than the general lifetimes as given beforehand.

In the following, the filter system and the control method according to the invention are described in more detail by reference to drawings. The drawings which are not intended to restrict the general concept of the invention to these exemplified embodiments show the following:
Fig. 1 shows a perspective view of a common filter system.
Fig. 2 shows a side view of a cabin and of a corresponding filter system (cross sectional view) for pressurizing the cabin according to the invention.
Fig. 3 shows a cross sectional view of a filter system according to the invention.
Fig. 4 shows a cross sectional view of a clamping system for the prefilter chamber of a filter system according to the invention.
Fig. 5 shows a cross sectional view of an alternative clamping system for the prefilter chamber of a filter system according to the invention.
Fig. 6 shows a perspective view of a hood used for a filter system according to the invention.
Fig. 7 shows a cross sectional view of a clamping system for the main filter chamber of a filter system according to the invention.

Fig. 1 shows a perspective view (explosion diagram) of a common filter system 900. It consists of housing 910, hood 915, filter stack 920 and blower motor 930 provided directly before the air outlet 940 into the cabin (not shown). The blower motor 930 sucks air from outside of the housing 910 via air inlets 950 in the hood 915. The air is then sucked through the filter stack 920 and blown directly into the cabin via air outlet 940 by the driving force of the blower motor 930. Thus, any pollutants entered into the system after the filter system 920, would directly distributed into the cabin by means of the blower motor 930. Especially, leakages between the filter system 920 and the blower motor 930 would lead to a direct pollution of the cabin. The same would apply if some particles or other pollutants would be sucked through the filter stack 920 or would be sucked directly into the blower motor 930.

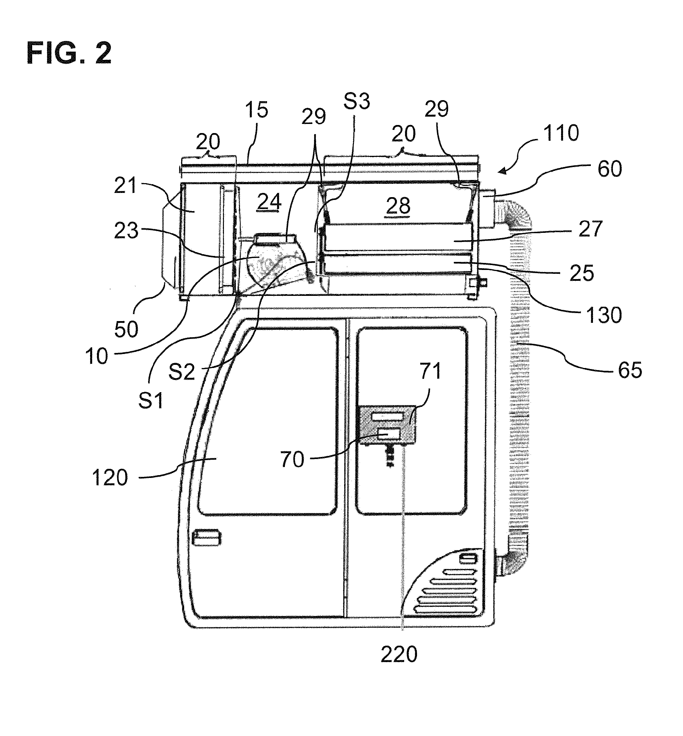

Fig. 2 shows a side view of a cabin 120 connected to a filter system 110 (cross sectional view) according to the invention. The filter system comprises of a housing 130 with a hood 15. The filter system 110 is, according to this exemplified embodiment, placed on and fixed to the cabin 120. The substantially air-tight housing 130 has at least one air inlet 50 and at least one air outlet 60 wherein the air outlet is connected to the cabin 120, for example, as shown in this embodiment via a flexible tube 65. Inside the housing, the filter system 110 comprises a filter system 20 consisting of prefilters 21 and 23 and main filters 25 and 27. The prefilters 21 and 23 are arranged in the prefilter chamber 24 which is close to the air inlet 50, while the main filters are arranged in a main filter chamber 28, which is close to the air outlet 60. The filter system 110 further comprises a blower motor 10, filter clamping systems 29 for holding the prefilters and main filters, and sensors S1, S2, and S3.

Parts of the filter system 110 can also be arranged outside the housing such as the flexible tube 65 or the control means 70 which can include the monitoring means 71 for monitoring the outside air pressure 220. If such a control means is used, the control means is generally directly connected with the blower motor for controlling and steering its speed on the basis of the monitored pressure level data.

As can be seen from this overall overview of the filter system 110 according to the invention, the blower motor is arranged between the prefilter chamber 24 and the main filter chamber 28, so that an overpressure is provided in the main filter chamber 28 and at the air outlet 60 in order to improve and maintain the safety of an operator working in the cabin 120. In contrast to the common system, the main filter chamber is all the time regulated to be in an atmosphere of overpressure. This can be achieved by pressing air through the main filters 25, 27, instead of sucking air through these filters. In addition, the prefilters 21, 23 allow a first filtration of pollutants before these will come into the blower motor 10. Thus, the safety of the total filter system 110 and the reliability of the blower motor 10 can be enhanced compared to the common filter system as shown in Fig. 1.

The sensors S1, S2, and S3 are adjusted to monitor the correct seat or the availability of the prefilters 21, 23 and/or main filters 25, 27.

The control means 70 monitors the outside pressure 220 and the pressure inside the cabin and steers the blower motor 10 according to the pressure level data signal monitored. If the pressure in the cabin is within the predetermined range of about 100 to 300 Pa, no alarm is given and the speed of the blower motor is adjusted such that a predetermined pressure level is maintained. That means, if the pressure inside the cabin 120 falls, the speed of the blower motor is increased to feed the cabin with additional air. If the pressure inside the cabin 120 increases to a level higher than the predetermined level, the control means sends a signal to the blower motor to lower the speed to the same level or a level somewhat higher as before to maintain the overpressure in the cabin 120 at the predetermined level. Therefore, the blower motor used is preferable an electronically steerable EC motor such as SPAL Type 020-BBL303-95. It is also possible to give an alarm if the temperature or the load of the blower motor 10 raises a predetermined level in order to avoid any risk for the operator of the equipment due to a malfunction or defect of the blower motor 10.

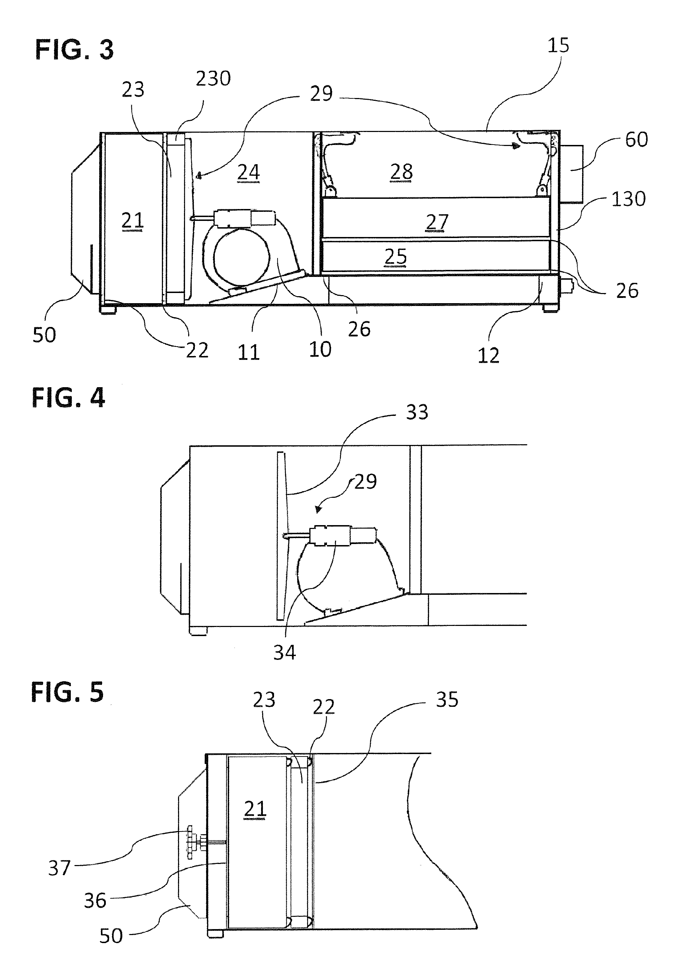

Additional features and objects of the filter system 110 are shown in Figures 3 to 7 in greater detail.

Fig. 3 shows a cross sectional view of a filter system according to the invention with a housing 130, blower motor 10, hood 15, air inlet 50, air outlet 60, the prefilter chamber 24 with prefilters 21 and 23, and the main filter chamber 28 with main filters 25 and 27. The blower motor 10 is arranged between the prefilter chamber 24 and the main filter chamber 28 as discussed beforehand, so that the prefilters 21 and 23 are arranged on its suction side and the main filters 25 and 27 are arranged at its pressure side.

The air flow is through the air inlet 50, the prefilter chamber 24, the blower motor 10, the main filter chamber 28 and the air outlet 60. The blower motor 10 sucks the air from the side into the fan portion and presses the air through the blower motor mounting plate 11 which is designed in form of a wedge portion to allow the air flow into the main filter chamber 28.

The prefilters 21, 23 and the main filters 25, 27 are arranged in the respective filter chamber such that the filters, which usually have frames 230 (only shown with regard to prefilter 23) are supported on reinforced resting areas 22, 26 which are pressed in respective seats either on the wall of the housing 130 or the mounting plate 11 and the filter holding means 12. The reinforced seating areas avoid the bending of the filters or filter frames and, thus, avoid a leakage of air and pollutants between the housing and the filter frames. Hence, the efficiency can significantly be improved with the provision of the reinforced seating areas as well.

The filters can easily be arranged into the seating areas by using the clamping systems 29 which can be provided with a quick lock system. Thus, after the hood has been opened, the clamping systems either automatically or manually can be unlocked to take the filters out of the filter system and replace them with fresh filters. Generally, the operation can be carried out without the need of any tools.

In this embodiment, the filters 21, 23, 25, and 27 are selected from the filters EU 5 or F5, EU 13 or H13 according to the norms EN 799 and 1822, respectively. Alternatively, one or more of the following active charcoal filters (Class 1T, 2T, or 3T depending on the intensity of pollution) can be used: filter for PAK's, inorganic compounds (such as chlorine, cyanide, or the like), acidic gases (such as hydrochloric acid, sulphur dioxide, or the like), ammoniac, amines, organic mercury compounds, hydrocarbons (such as acetone, chloroform, vinyl bromide, or the like). Despite of these exemplified filters used, commonly used filters for such filter systems can be used in combination of the afore-mentioned filters or instead of these filters.

Fig. 4 shows a cross sectional view of an alternative clamping system for the prefilter chamber of a filter system as has been shown in the embodiment of Fig. 3. A movable plate 33 can be pressured against the filters, especially the frames of the filters. The plate 33 is movably arranged at a cylinder 34 which can be fixed in an open and closed position. In order to allow air flow through the plate, the plate 33 preferably has holes or is constituted of a mesh or fence.

Fig. 5 shows a cross sectional view of an alternative clamping system for the prefilter chamber of a filter system according to the invention. Instead of the movable plate 33 (cf. Fig. 3) the plate 35 is a fixed frame and functions as seats for the reinforced resting areas 22 of the prefilter 23. The prefilters 21, 23 are pressed against the fixed frame 35 by means of a movable frame 36 and are fixed by one or two screws 37. The screw(s) 37 are easily accessible from the air inlet 50 or the outside of the housing at the side of the air inlet 50.

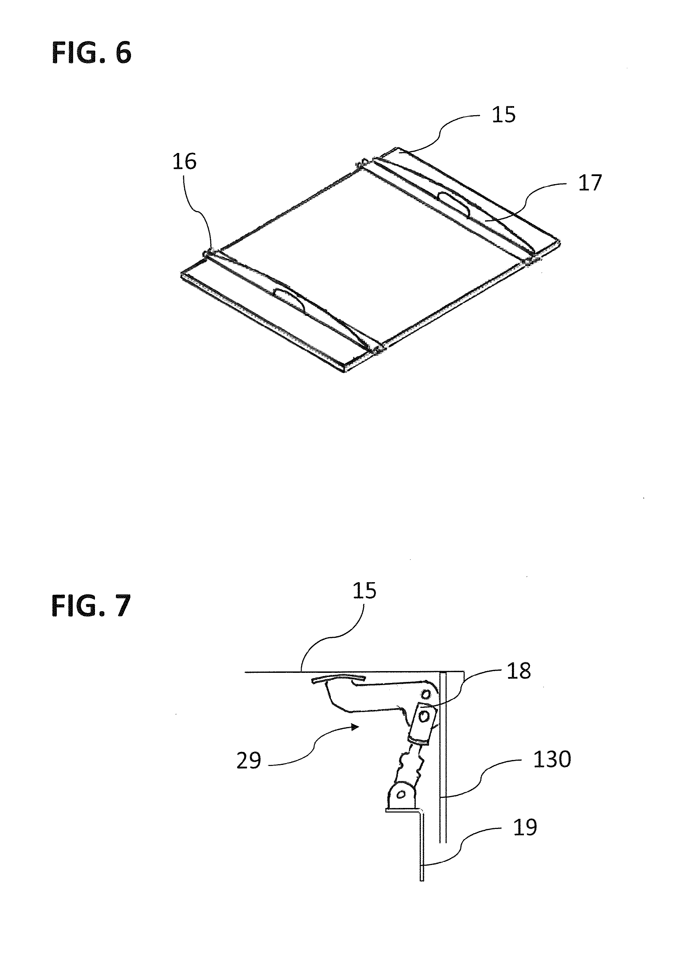

Fig. 6 shows a perspective view of a hood used for a filter system according to the invention. The hood 15 comprises two latch pins 16 on the long sides of the hood 15 in which latches (not shown) can be engaged for closing the hood 15. At the top of the hood 15, two bars 17 with grips for opening and closing the hood 15 by the operator during the change of the filters or further maintenance operations are arranged.

Fig. 7 shows a cross sectional view of a clamping system 29 for the main filter chamber of a filter system according to the invention. During closure of the hood 15, the leverage 18 presses the clamp 19 to the frame of the filters (not shown), thereby pressing the filters into the seating areas (not shown) at the bottom of the housing. This easy and effective clamping system 29 is preferably sued in the main filter chamber of the filter system according to the invention because the main filters are advantageously provided horizontally in the filter system. Of course this clamping system 29 can be used in vertical direction as well, for example in the prefilter chamber.

Even though the invention has been described in greater detail by the afore-mentioned embodiments, the invention shall not be limited by these exemplified embodiments. For example, only one prefilter and/or only one main filter can be effective even though two or more different prefilters or main filters are preferable from the aspect of efficiency and safety. The afore-mentioned pressure can be modified as well while the given pressure range between about 100 and 300 Pascal for the cabin is the recommended one at the moment. Therefore, it is preferred to adapt the predetermined pressure range to within this range. The scope of the invention is solely given by the attached claims.

## Claims

1. A pressurized filter system (110) for pressurizing a cabin (120) of a stationary or mobile equipment (100) with filtered air, comprising a substantially airtight housing (130) comprising a blower motor (10) and an air filter system (20) for distributing filtered air drawn from outside the cabin through inlet (50) into the cabin (120) by means of outlet (60), wherein the filter system comprises at least a number of prefilters (21, 23) and a number of main filters (25, 27), and the blower motor (10) is arranged between the prefilter(s) (21, 23) and the main filter(s) (25, 27).

2. The pressurized filter system according to claim 1, wherein air drawn from outside the cabin is sucked into the prefilter(s) (21, 23) by a vacuum generated in a prefilter chamber (24) by the blower motor (10) and is then pressed into the main filter(s) (25, 27) arranged in a main filter chamber (28) on the pressure side of the blower motor (10).

3. The pressurized filter system according to claim 1 or 2, wherein the cabin (120) is substantially tightly closed to allow maintaining an overpressure in the cabin (120).

4. The pressurized filter system according to one of the preceding claims, wherein the prefilter(s) (21, 23) and/or the main filter(s) (25, 27) are fixed by a clamping system (29) in the prefilter chamber (24) and the main filter chamber (28), respectively.

5. The pressurized filter system according to one of the preceding claims, wherein the prefilter(s) (21, 23) and/or the main filter(s) (25, 27) are horizontal positioned filters and their edges are arranged on reinforced resting areas (22, 26) provided in the prefilter chamber (24) and the main filter chamber (28), respectively.

6. The pressurized filter system according to one of the preceding claims, comprising a clamping system in the prefilter chamber (24) comprising a reinforced fixed frame (35) behind the prefilter(s) (21, 23) and two clamps or screws (37) at the side of the air inlet (50) adjusted to press the prefilter(s) (21, 23) against the fixed frame (35).

7. The pressurized filter system according to one of the preceding claims, further comprising a control means (70), for measuring and maintaining the pressure inside the cabin (120) to a predetermined level of overpressure compared to the pressure outside the cabin (220), in particular to an overpressure of at least 100 Pa and a maximum of 300 Pa.

8. The pressurized filter system according to claim 7 further comprising a monitoring means (71) inside the cabin (120) to measure and monitor pressure level data signal therein.

9. The pressurized filter system according to claim 8, further comprising a control means (70) sending the monitored pressure level data signal generated by the monitoring means (71) to the blower motor (10) or a PWM signal to the blower motor (10) and controlling the pressure level inside the cabin (120) within a predetermined level.

10. A method for controlling a pressurized filter system for a cabin (120) of a stationary or mobile equipment (100), the system comprises a substantially airtight housing (130) comprising a blower motor (10) and an air filter system (20) for distributing filtered air drawn from outside the cabin (220) into the cabin (120), wherein the filter system (20) comprises at least a number of prefilters (21, 23) and a number of main filters (25, 27) and the blower motor is arranged between the prefilter(s) (21, 23) and the main filter(s) (25, 27), wherein the method comprises the step of generating and maintaining the pressure inside the cabin (120) within a predetermined level.

11. The method of claim 10, further comprising the step of feeding the cabin (120) with new filtered air.

12. The method of claim 10 or 11, further comprising a step of monitoring pressure level data signal inside the cabin (120) and controlling the pressure level inside the cabin within a predetermined level of overpressure compared to the pressure outside the cabin (220), in particular to an overpressure of at least 100 Pa.

13. The method of any of the preceding claims 10 to 12, comprising the step of controlling and displaying of the correct position of the prefilter(s) (21, 23) and/or main filter(s) (25, 27) before and during the operation of the pressurized filter system.
